# EUROPEAN PATENT APPLICATION

(11) **EP 2 535 763 A1**
(43) Date of publication of application: **19.12.2012**
(21) Application number: 12171759.9
(22) Date of filing: 13.06.2012
(51) Int. Cl.: G02B 27/22, G09G 3/20, G09G 3/34, H04N 13/04

(54) **STEREOSCOPIC DISPLAY APPARATUS**

(30) Priority: 16.06.2011 TW 100121103
(71) Applicant: Innocom Technology (Shenzhen) Co., Ltd., Shenzhen City 518109 (CN); Chimei Innolux Corporation, Miao-Li County (TW)
(72) Inventor: TSAI, Yung-Yu, 350 Miao-Li County (TW); SUN, Hung-Chih, 350 Miao-Li County (TW)
(74) Representative: 2K Patentanwälte Blasberg Kewitz & Reichel

(57) **Abstract**

A stereoscopic display apparatus is cooperated with a shutter apparatus. The stereoscopic display apparatus includes a display module and an infrared emitting device. The display module has a viewable area and an optical sheet. The infrared emitting device is disposed in the display module. The light emitted from the infrared emitting device passes through the optical sheet and the viewable area and be received by the shutter apparatus to control it. The stereoscopic display apparatus can reduce the cost and make the appearance of the stereoscopic display apparatus have better integrity.

## Description

### BACKGROUND OF THE INVENTION

### Field of Invention

The present invention relates to a display apparatus and, in particular, to a stereoscopic display apparatus.

### Related Art

The display apparatuses are applied to various kinds of electronic products and have gradually become one of the indispensable devices. Recently, the manufacturers not only endeavor to develop the display apparatuses with high quality and high resolution, but also devote to the researches of stereoscopic display technology to simulate stereoscopic images, such as the stereoscopic display apparatus. The existing stereoscopic display methods are basically divided into two types. One is to allow the user to view the stereoscopic images by naked eyes (autostereoscopic display), and the other is to allow the user wearing shutter glasses to view the stereoscopic images.

In order to present the stereoscopic perception to naked eyes, the autostereoscopic display apparatus is usually configured with a light-shielding layer disposed on the display surface of a display panel. By the proper refraction of lens, the images corresponding to the left-eye pixels on the display panel can be transmitted to a user's left eye, while the images corresponding to the right-eye pixels on the display panel can be transmitted to a user's right eye. Accordingly, the user's two eyes can receive different images with binocular parallax respectively to form stereoscopic images.

On the other hand, if the stereoscopic perception is presented by a stereoscopic display apparatus and cooperating with the shutter glasses (or 3D glasses), an additional synchronous emitter for the 3D glasses is required. The stereoscopic display apparatus usually includes a circuit board and an infrared emitting device which is installed on the circuit board. Because the infrared emitting device is limited by pointing direction, the emitter must be placed at a location toward the 3D glasses to ensure that the infrared signals can be transmitted from the infrared emitting device to the shutter glasses without any interference. Otherwise, the shutter glasses may not be able to receive the infrared signals, which may cause the abnormal operation of the shutter glasses.

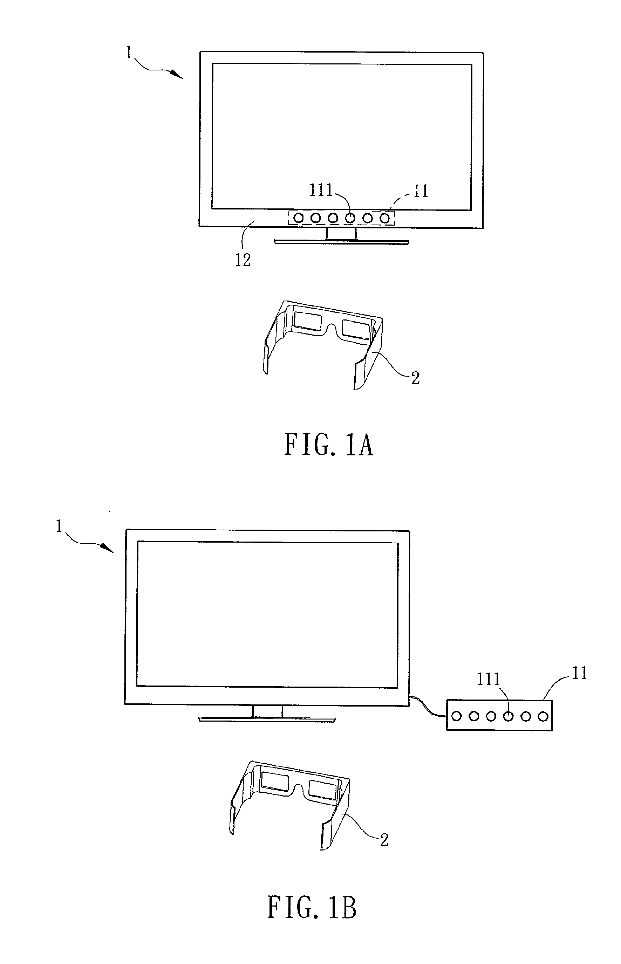

FIGS. 1A and 1B are illustrations of a conventional stereoscopic display apparatus 1. Conventionally, in order to transmit infrared signals from an infrared emitting device 111 of a synchronous emitter 11 to the shutter glasses 2 without interference, the synchronous emitter 11 is commonly disposed in the stereoscopic display apparatus 1 as shown in FIG. 1A. The infrared emitting device 111 is inlaid on a case 12 of the stereoscopic display apparatus 1, so that the infrared emitting device 111 is exposed from the case 12. Alternatively, as shown in FIG. 1B, the synchronous emitter 11 is configured outside the stereoscopic display apparatus 1, and a conducting wire is used for electrically connecting the synchronous emitter 11 to the stereoscopic display apparatus 1, thereby directly transmitting the 3D-glasses control signals from the infrared emitting device 111 to the shutter glasses 2.

However, when the synchronous emitter 11 is either inlaid on the case 12 or is configured outside the display, an additional circuit board is required for installing the infrared emitting device 111, which causes a higher cost for manufacturing the stereoscopic display apparatus 1. Furthermore, if the synchronous emitter 11 is inlaid on the case 12, the case 12 of the stereoscopic display apparatus 1 must be configured with a hole. This is time and manpower consuming, and the overall appearance and integrity of the stereoscopic display apparatus 1 are also affected. In addition, if the synchronous emitter 11 is connected externally, the overall appearance of the stereoscopic display apparatus 1 is made more complicated, and the integrity of the stereoscopic display apparatus 1 is insufficient.

Therefore, it is an important subject of the present invention to provide a stereoscopic display apparatus which can reduce the cost and make the appearance of the stereoscopic display apparatus simple and neat to provide better integrity.

### SUMMARY OF THE INVENTION

In view of the foregoing, an object of the present invention is to provide a stereoscopic display apparatus which can reduce the cost and make the appearance of the stereoscopic display apparatus simple and neat to provide better integrity.

To achieve the above object, the present invention discloses a stereoscopic display apparatus cooperated with a shutter apparatus. The stereoscopic display apparatus includes a display module and an infrared emitting device. The display module has a viewable area and an optical sheet. The infrared emitting device is disposed in the display module. The light emitted from the infrared emitting device passes through the optical sheet and the viewable area, and is then received by the shutter apparatus to control the operation of the shutter apparatus.

In one embodiment, the display module comprises a backlight unit and a display panel, and the optical sheet and the infrared emitting device are disposed on the backlight unit.

In one embodiment, the infrared emitting device is disposed on a side, at a corner or on an inner side of the backlight unit.

In one embodiment, the backlight unit comprises at least one light source, which comprises a cold cathode fluorescent lamp (CCFL), a light-emitting diode (LED), or their combination.

In one embodiment, the infrared emitting device is disposed adjacent to the light source.

In one embodiment, the infrared emitting device and the light source are disposed alternately.

In one embodiment, the display module comprises an emissive display panel, and the infrared emitting device is disposed on the emissive display panel.

In one embodiment, the backlight unit comprises a driving control circuit board. The driving control circuit board generates a control signal for stereoscopic glasses and transmits it to the infrared emitting device for controlling the infrared emitting device to emit light.

In one embodiment, the infrared emitting device is electrically connected with the driving control circuit board.

In one embodiment, the shutter apparatus comprises an infrared receiver, which receives the light emitted by the infrared emitting device so as to control the shutter apparatus.

In one embodiment, the shutter apparatus is a head-mounted shutter apparatus or a shutter glasses.

In one embodiment, the shutter apparatus comprises a synchronous control unit, a left shutter unit and a right shutter unit, and the synchronous control unit is electrically connected to the left shutter unit and the right shutter unit.

In one embodiment, the synchronous control unit is synchronized with the infrared emitting device for controlling to open or close the left shutter unit and/or the right shutter unit.

In one embodiment, the display module outputs a left image and a right image alternately.

As mentioned above, the stereoscopic display apparatus of the present invention includes the display module and the infrared emitting device disposed in the display module. The light emitted by the infrared emitting device passes through the optical sheet and the viewable area, and is then received by the shutter apparatus, thereby controlling the operation of the shutter apparatus. Compared with the conventional art, the present invention doest not need the additional circuit board for installing the infrared emitting device, and the infrared emitting device is not required to be inlaid on the case or connected externally. Therefore, the cost of the stereoscopic display apparatus of the present invention can be reduced, and the appearance of the stereoscopic display apparatus can be simple and neat so as to provide better integrity.

### BRIEF DESCRIPTION OF THE DRAWINGS

The invention will become more fully understood from the detailed description and accompanying drawings, which are given for illustration only, and thus are not limitative of the present invention, and wherein:

FIGS. 1A and 1B are illustrations of a conventional stereoscopic display apparatus;

FIGS. 2A to 2G are illustrations of different aspects of a stereoscopic display apparatus according to a preferred embodiment of the present invention;

FIG. 3 is a functional block diagram of the stereoscopic display apparatus according to the preferred embodiment of the present invention; and

FIG. 4 is a partial exploded view of a shutter apparatus.

### DETAILED DESCRIPTION OF THE INVENTION

The present invention will be apparent from the following detailed description, which proceeds with reference to the accompanying drawings, wherein the same references relate to the same elements.

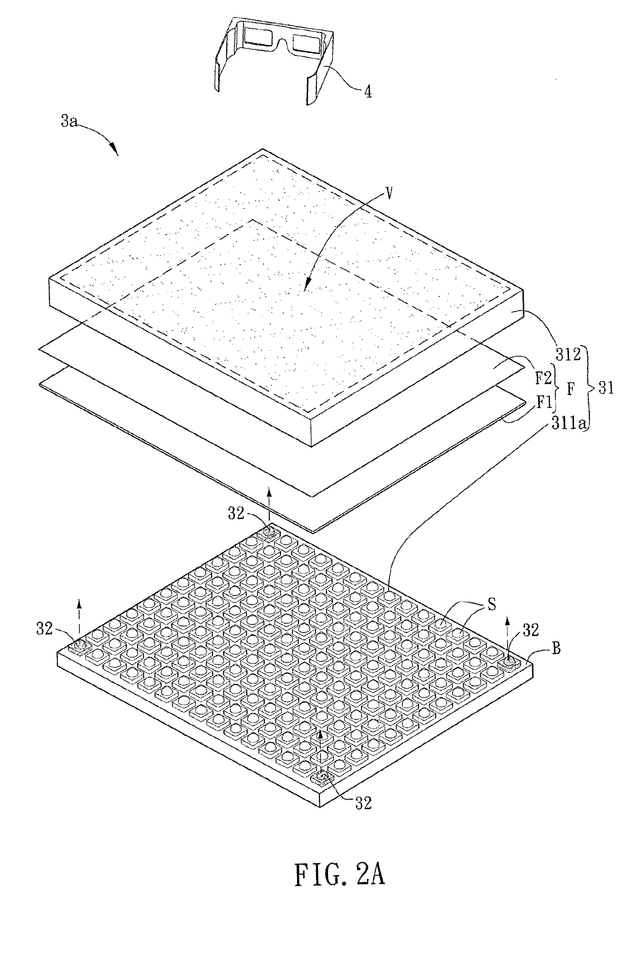

FIG. 2A is an illustration of an aspect of a stereoscopic display apparatus 3a according to a preferred embodiment of the present invention. Referring to FIG. 2A, the stereoscopic display apparatus 3a is cooperated with a shutter apparatus 4, and a shutter unit of the shutter apparatus 4 is substantially disposed between human eyes and the stereoscopic display apparatus 3a. In other words, the shutter unit is disposed in an optical path between human eyes and the stereoscopic display apparatus 3a, so that the user can view the stereoscopic display apparatus 3a through the shutter apparatus 4. The stereoscopic display apparatus 3a includes a display module 31 and an infrared emitting device 32. In this embodiment, the stereoscopic display apparatus 3a can be used as a display device applied to televisions, digital picture frames, monitors, cinema displays or screens for electronic devices. Furthermore, the shutter apparatus 4 can be, for example, a shutter glasses or an apparatus that can block the user's left and right eyes alternately such as a shutter apparatus with an active rotating or moving element. Herein, the shutter apparatus 4 is, for example but not limited to, a shutter glasses. Of course, it can be other head-mounted shutter apparatuses.

The display module 31 has a viewable area V and an optical sheet F. The viewable area V of the display module 31 is an area which is protruded from a case and capable of displaying images. In this embodiment, the display module 31 is, for example, an emissive liquid crystal display module, and it further includes a backlight unit 311 a and a display panel 312. The viewable area V is referred to an area on the display panel 312 which is not covered by the case, so that a light can be emitted from the viewable area V to reach viewers. The optical sheet F is disposed on the backlight unit 311a and is located adjacent to the display panel 312. In this embodiment, the optical sheet F includes a diffusing plate F1 and a diffusing sheet F2 for uniforming the light emitted from the backlight unit 311 a. Of course, in other aspects, the number of the optical sheet F can be more than two, which may include, for examples, a light guiding plate, a prism, a diffusing plate, a diffusing sheet, a brightness enhancement film, or their combinations.

Referring to FIG. 2A, the display module 31 includes a direct type backlight unit 311 a, which includes at least one light source S. The light source S can, for example, include a cold cathode fluorescent lamp (CCFL), a light-emitting diode (LED), or their combination. Furthermore, in this embodiment, the backlight unit 311 a has a plurality of light sources S, which are LEDs arranged in an array. In addition, the backlight unit 311 a can further include a driving control circuit board (not shown) electrically connected with the light sources S for controlling the ON/OFF of the light sources S.

The infrared emitting device 32 is disposed in the display module 31. In this case, there are four infrared emitting devices 32 arranged in the backlight unit 311a and disposed adjacent to the light sources S. The infrared emitting devices 32 are, for example, infrared LEDs. The infrared emitting devices 32 can be disposed on sides, at corners or on inner sides of the backlight unit 311 a. The amount of the infrared emitting devices 32 is preferably configured without affecting the overall evenness and quality of the light emitted by the backlight unit 311 a. Similar to the light sources S, the infrared emitting devices 32 are also electrically connected to the driving control circuit board, and the driving control circuit board has a microprocessor for controlling the ON/OFF of the infrared emitting devices 32.

A control signal for stereoscopic glasses is generated by the microprocessor on the driving control circuit board and then transmitted to the infrared emitting devices 32, so as to turn on/off the infrared emitting devices 32. Because the light sources S and the infrared emitting devices 32 are driven by the same circuit board, it is unnecessary to provide another circuit board for installing the circuits of the infrared emitting devices 32. As a result, the cost of the stereoscopic display apparatus 3a can be reduced.

The light emitted by the infrared emitting devices 32 passes through the optical sheet F and the viewable area V, and is then received by the shutter apparatus 4 to control it. Furthermore, the shutter apparatus 4 can include an infrared receiver (not shown), and the infrared receiver can receive the infrared light emitted by the infrared emitting devices 32.

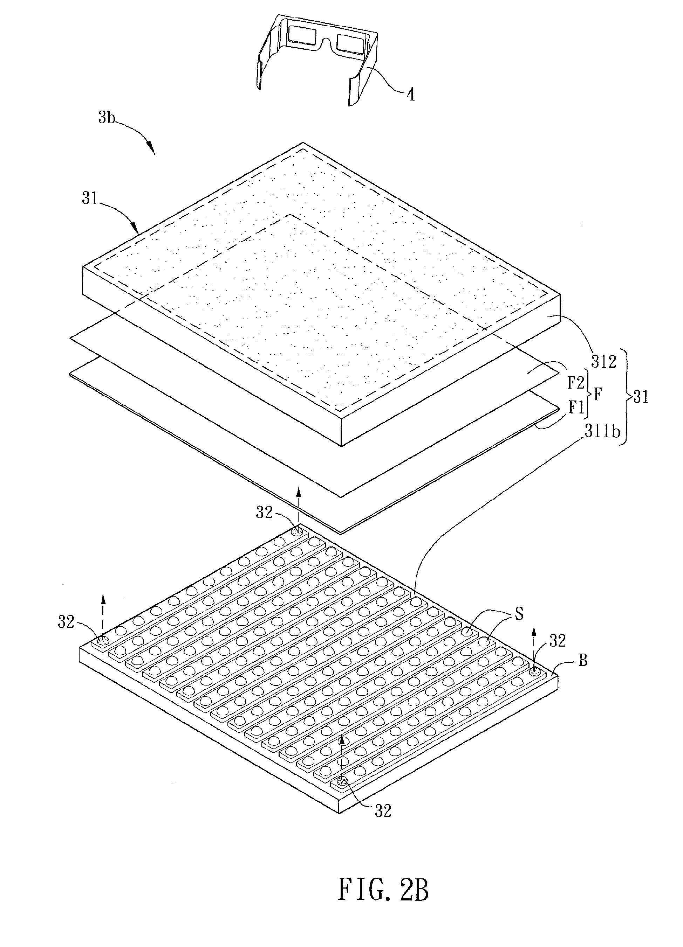

Referring to the aspect in FIG. 2A, the backlight unit 311 a has a plurality of LEDs (a plurality of the light sources S), and the LEDs and the infrared emitting devices 32 form a two-dimensional array arrangement on a substrate B. However, in other aspects, the LEDs and the infrared emitting devices 32 can be arranged in other ways, for example, a one-dimensional array, or irregular arrangement. Furthermore, as shown in FIG. 2B, the infrared emitting devices 32 and the light sources S of a backlight unit 311b can be made as light bars by surface mounting, and a plurality of the light bars can then be assembled on the substrate B, so that the assembly of the backlight unit 311b and the infrared emitting devices 32 is formed.

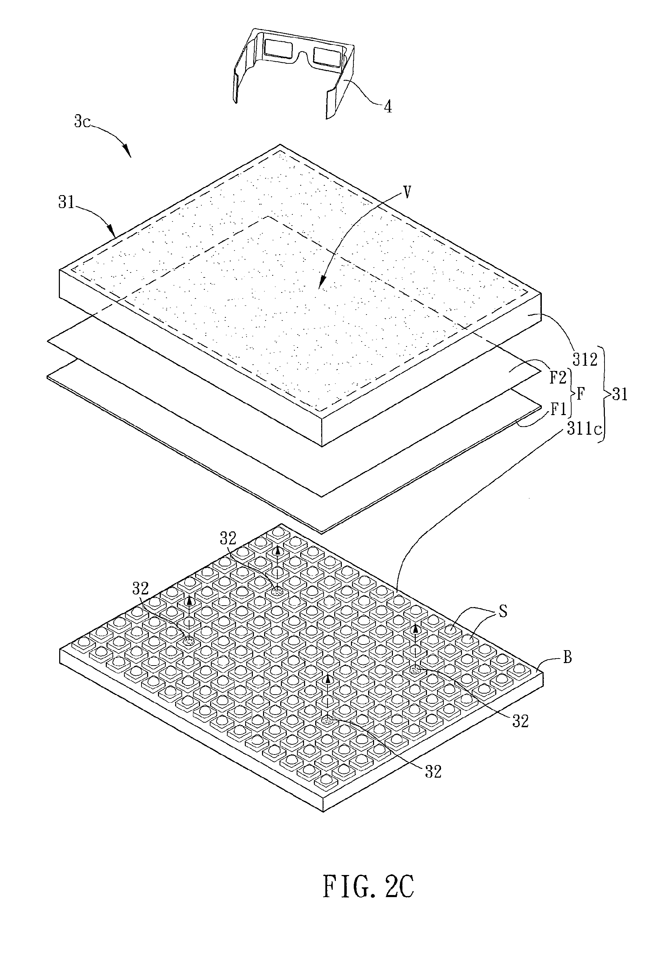

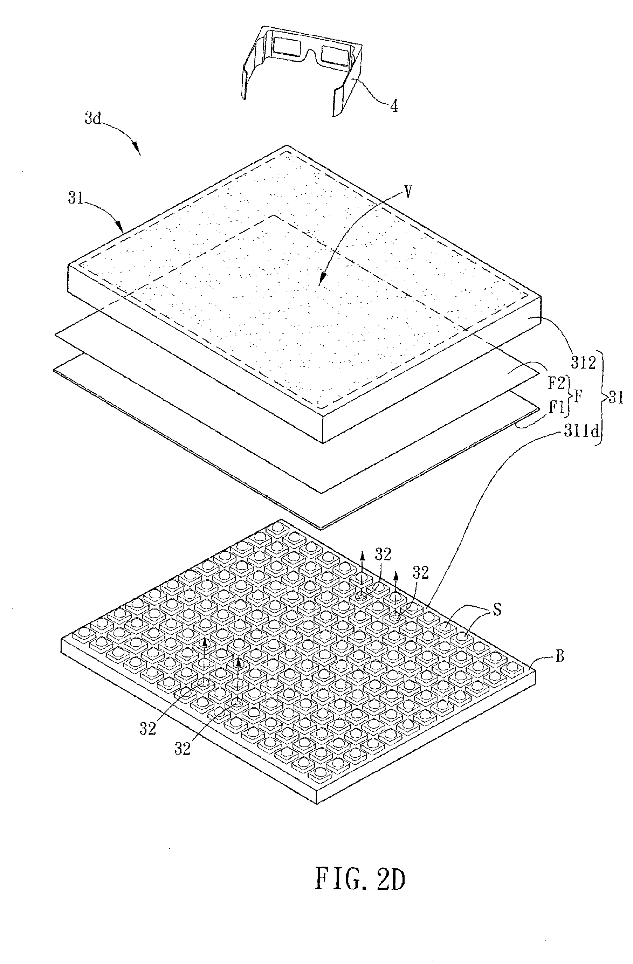

FIG. 2C is an illustration of another stereoscopic display apparatus 3c according to the preferred embodiment of the present invention, and FIG. 2D is an illustration of another stereoscopic display apparatus 3d according to the preferred embodiment of the present invention.

Referring FIGS. 2C and 2D, the arrangements of LEDs in the backlight units 311 c and 311 d are the same as that in the backlight unit 311 a. The numbers of the infrared emitting devices 32 of stereoscopic display apparatuses 3c and 3d are still four, but the infrared emitting devices 32 are disposed on inner sides of the backlight units 311c and 311d instead of being disposed at four corners. In this case, the four infrared emitting devices 32 are arranged as a rectangle. The amount of the infrared emitting devices 32 is preferably configured without affecting the overall evenness and quality of the light emitted by the backlight units 311c and 311d. The numbers and disposing locations of the infrared emitting devices 32 in FIGS. 2C and 2D are only for examples, and they can be disposed at different locations inside the backlight units 311 c and 311 d and with different numbers according to the requirements.

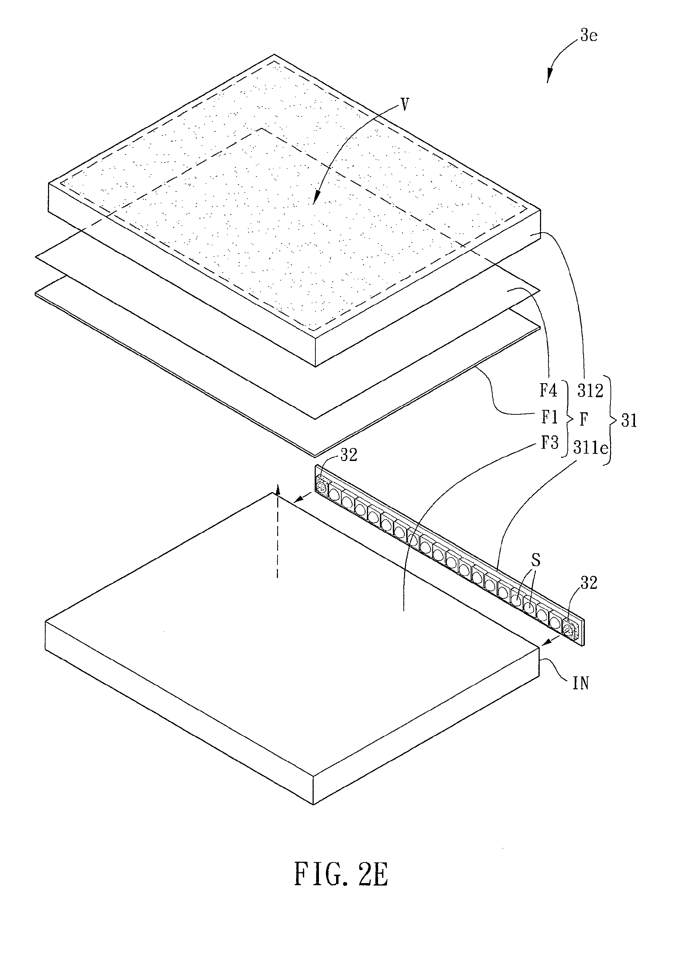

FIG. 2E is an illustration of another stereoscopic display apparatus 3e according to the preferred embodiment of the present invention. In FIG. 2E, a shutter apparatus cooperated with a stereoscopic display apparatus 3e is not shown.

In this embodiment, an edge-light type backlight unit 311 e of the display module 31 is used as an example. The amount of the infrared emitting devices 32 is preferably configured without affecting the overall evenness and quality of the light emitted by the backlight unit 311 e. In this embodiment, a number of the infrared emitting devices 32 is two, and the two infrared emitting devices 32 are disposed at two ends of a plurality of the light sources S respectively. Furthermore, the optical sheet F of this embodiment includes a diffusing plate F1, a brightness enhancement film F4 and a light guiding plate F3. The light emitted by the infrared emitting devices 32 enters the light guiding plate F3 through a light incident side IN thereof. By effects of the light guiding plate F3, the diffusing plate F1 and the brightness enhancement sheet F4, the light emitted from the infrared emitting devices 32 can reach the shutter apparatus (not shown) evenly, and be received by the shutter apparatus so as to control the shutter apparatus.

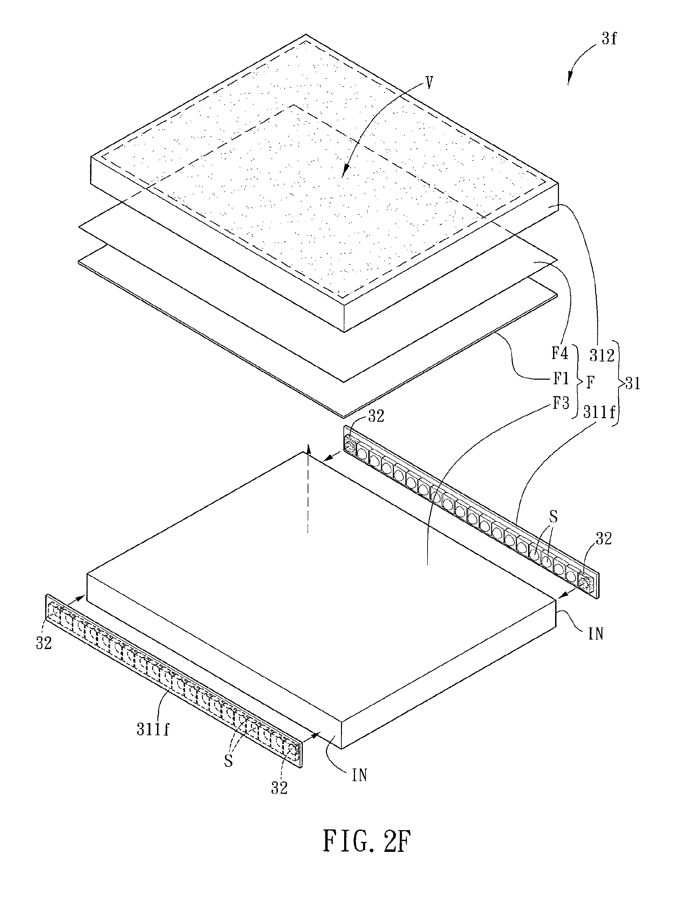

FIG. 2F is an illustration of another stereoscopic display apparatus 3f according to the preferred embodiment of the present invention. In FIG. 2F, a shutter apparatus cooperated with a stereoscopic display apparatus 3f is not shown.

Referring to FIG. 2F, a different between the stereoscopic display apparatuses 3e and 3f lies in that, the light in the stereoscopic display apparatus 3e enters from a single side, while the light in the stereoscopic display apparatus 3f enters from two sides. The amount of the infrared emitting devices 32 is preferably configured without affecting the overall evenness and quality of the light emitted by backlight units 311f. In this aspect, a number of the infrared emitting devices 32 is four, and the four infrared emitting devices 32 are disposed at two ends of the backlight units 311f respectively.

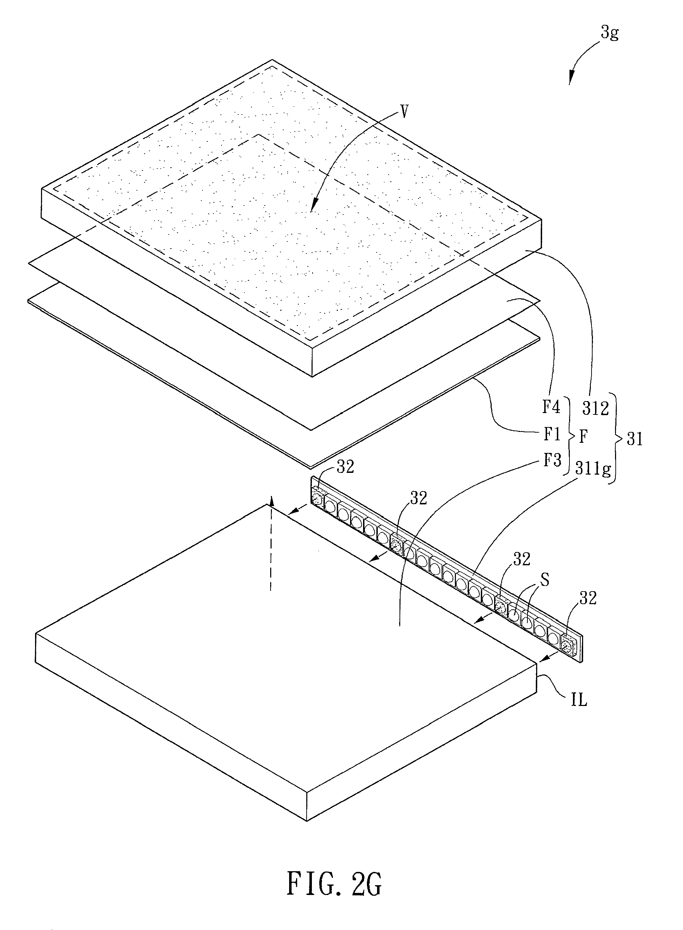

FIG. 2G is an illustration of another stereoscopic display apparatus 3g according to the preferred embodiment of the present invention. In FIG. 2G, a shutter apparatus cooperated with a stereoscopic display apparatus 3g is not shown.

Referring to FIG. 2G, different from the stereoscopic display apparatuses 3e, the stereoscopic display apparatus 3g includes a plurality of infrared emitting devices 32. The amount of the infrared emitting devices 32 is preferably configured without affecting the overall evenness and quality of the light emitted by backlight units 311 g. Besides, the infrared emitting devices 32 and the light sources S are disposed alternately. In more detailed, a number of the infrared emitting devices 32 is four in this aspect, and a fixed number or an unfixed number of the light sources S can be disposed between two of the infrared emitting devices 32. As shown in FIG. 2G, a number of the light sources S disposed between two of the infrared emitting devices 32 in the stereoscopic display apparatus 3g is four, seven and five respectively.

In other embodiments, if the display module 31 includes an emissive display panel (not shown), the backlight unit is omitted. Therefore, the infrared emitting devices 32 can be disposed on the emissive display panel directly. The emissive display panel is, for example, an organic light-emitting diode (OLED) display panel, and the light emitted by the infrared emitting devices 32 can still pass through the optical sheet and the viewable area to be received by the shutter apparatus 4 so as to control the shutter apparatus 4.

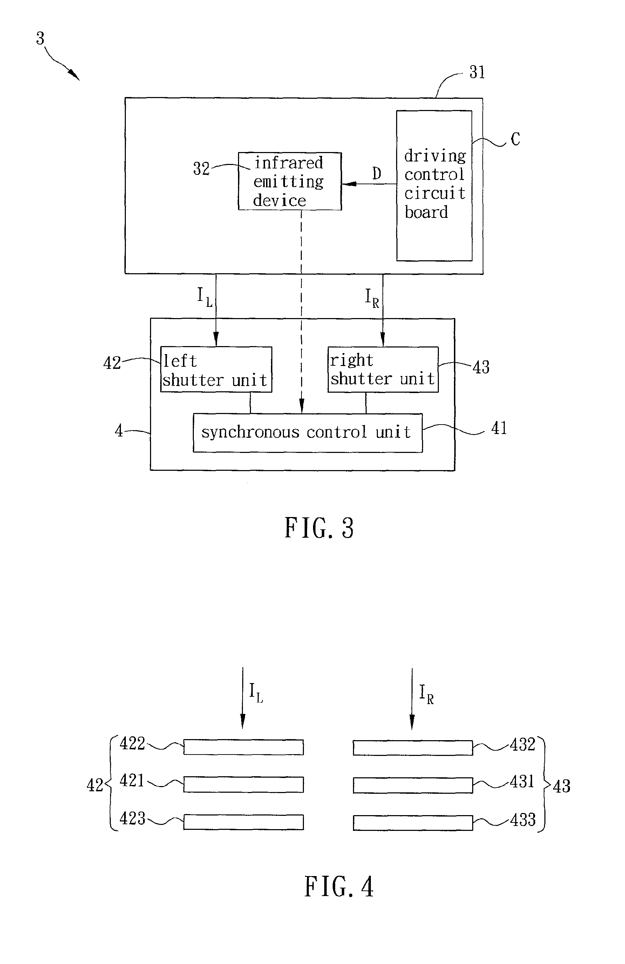

FIG. 3 is a functional block diagram of the stereoscopic display apparatus 3 according to the preferred embodiment of the present invention. In FIG. 3, the optical sheet F is not shown.

The display module 31 can output a left eye image I_{L} and a right eye image I_{R} alternately. In this case, a frequency of the left eye image I_{L} and the right eye image I_{R} displaying on the display module 31 can be over 60Hz, or multiples of 60Hz in order to avoid to be perceived by human eyes. It should be noted that, the left eye image I_{L} and the right eye image I_{R} are alternately output by the display module 31 means that the display module 31 outputs the left eye image I_{L} and the right eye image I_{R} in turn rapidly. In other words, the images are output in a sequence of the left eye image I_{L}, the right eye image I_{R}, the left eye image I_{L}, the right eye image I_{R}, and so on. Furthermore, the left eye image I_{L} and the right eye image I_{R} are alternately output means that the left eye image I_{L} and the right eye image I_{R} can be overlapped partially, or the two sequential images are conjoined with each other, or there is a time gap between the two sequential images. In addition, the left eye image I_{L} is not equal to the right eye image I_{R}, and they have binocular parallax, so that a stereoscopic image is formed because of persistence of vision after the rapidly alternated left eye image I_{L} and the right eye image I_{R} are viewed by human eyes.

Referring to FIG. 3, the backlight unit (not shown) can further include a driving control circuit board C, which is configured to generate a control signal D for stereoscopic glasses and sends it to the infrared emitting devices 32. Accordingly, the infrared emitting devices 32 can be controlled to be light up or extinguished. The driving control circuit board C is also the driving circuit board for driving the backlight unit and the infrared emitting devices 32. Therefore, the cost of the stereoscopic display apparatus 3 can be reduced.

Furthermore, the shutter apparatus 4 can include a synchronous control unit 41, a left shutter unit 42 and a right shutter unit 43. The synchronous control unit 41 is electrically connected to the left shutter unit 42 and the right shutter unit 43. The synchronous control unit 41 receives the light emitted by the infrared emitting devices 32, and is synchronized with the infrared emitting devices 32 for controlling to open and/or close the left shutter unit 42 and the right shutter unit 43. According to the light emitted by the infrared emitting devices 32, the synchronous control unit 41 allows a user to see the left eye image I_{L} through the left shutter unit 42, and to see the right eye image I_{R} through the right shutter unit 43 alternately.

The light emitted by the infrared emitting devices 32 can control to open the left shutter unit 42 of the shutter apparatus 4 and to close the right shutter unit 43 of the shutter apparatus 4, or control to close the left shutter unit 42 and to open the right shutter unit 43. Of course, the light emitted by the infrared emitting devices 32 can also control to open or close the left shutter unit 42 and the right shutter unit 43 at the same time.

FIG. 4 is a partial exploded view of a shutter apparatus 4. Referring to FIGS. 3 and 4, the shutter glasses are used as an example for the shutter apparatus 4. It should be noted that, in FIG. 4, the liquid crystal elements 421 and 431 and the polarized elements 422, 423, 432 and 433 are not shown in actual scales, and structures of the glasses frame can be designed differently based on different requirements which are omitted herein. Of course, such omitted structures should be included when the disclosure is used in applications.

The left shutter unit 42 includes a liquid crystal element 421 and two polarized elements 422 and 423, and the right shutter unit 43 includes a liquid crystal element 431 and two polarized elements 432 and 433. The liquid crystal elements 421 and 431 can be, for example, a liquid crystal layer interposed between two substrates, and the liquid crystal elements 421 and 431 can include twisted nematic (TN) liquid crystals, super twisted nematic (STN) liquid crystals, double layer super twisted nematic (DSTN) liquid crystals, cholesteric liquid crystals or blue phase liquid crystals. The liquid crystal element 421 is disposed between the polarized elements 422 and 423, while the liquid crystal element 431 is disposed between the polarized elements 432 and 433. The polarized elements 422 and 423 can be polarized sheet sets with perpendicular polarizing axial directions, and the polarized elements 432 and 433 can also be polarized sheet sets with perpendicular polarizing axial directions. By controlling of the synchronous control unit 41, a shielding effect is effectively generated by the left shutter unit 42 and the right shutter unit 43. Of course, more than two of the polarized elements can be used for enhancing the shielding effect.

Therefore, since the liquid crystal elements 421 and 431 can be controlled to rotate by applying proper voltages so as to change their polarization directions, the desired shielding and transparent effects can therefore be generated by cooperating with the polarizing elements 422, 423, 432 and 433. Accordingly, the left shutter unit 42 can provide the sequential statuses of shielding, transparent, shielding, transparent, and so on according to the light emitted by the infrared emitting devices 32, while the right shutter unit 43 can provide the sequential statuses of transparent, shielding, transparent, shielding, and so on, which are opposite to the status of the left shutter unit 42. Consequently, the user can see the left eye image I_{L} through the left shutter unit 42 (when the left shutter unit 42 is in the transparent status and the right shutter unit 43 is in the shielding status), and see the right eye image I_{R} through the right shutter unit 43 (when the left shutter unit 42 is in the shielding status and the right shutter unit 43 is in the transparent status) alternately. Thus, the user's eyes can respectively receive the left eye image I_{L} and the right eye image I_{R} with binocular parallax so as to build a stereoscopic image.

In summary, the stereoscopic display apparatus of the present invention includes the display module and the infrared emitting device disposed in the display module. The light emitted by the infrared emitting device passes through the optical sheet and the viewable area, and is then received by the shutter apparatus, thereby controlling the operation of the shutter apparatus. Compared with the conventional art, the present invention doest not need the additional circuit board for installing the infrared emitting device, and the infrared emitting device is not required to be inlaid on the case or connected externally. Therefore, the cost of the stereoscopic display apparatus of the present invention can be reduced, and the appearance of the stereoscopic display apparatus can be simple and neat so as to provide better integrity.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A stereoscopic display apparatus cooperated with a shutter apparatus, the stereoscopic display apparatus comprising:
a display module having a viewable area and an optical sheet; and
an infrared emitting device disposed in the display module, wherein a light emitted from the infrared emitting device passes through the optical sheet and the viewable area, and is then received by the shutter apparatus so as to control the shutter apparatus.

2. The stereoscopic display apparatus according to claim 1, wherein the display module comprises a backlight unit and a display panel, and the optical sheet and the infrared emitting device are disposed on the backlight unit.

3. The stereoscopic display apparatus according to claim 2, wherein the infrared emitting device is disposed on a side, at a corner or on an inner side of the backlight unit.

4. The stereoscopic display apparatus according to claim 2 or 3, wherein the backlight unit comprises at least one light source, and the light source comprises a cold cathode fluorescent lamp (CCFL), a light-emitting diode (LED), or their combination.

5. The stereoscopic display apparatus according to claim 4, wherein the infrared emitting device is disposed adjacent to the light source.

6. The stereoscopic display apparatus according to claim 4, wherein the infrared emitting device and the light source are disposed alternately.

7. The stereoscopic display apparatus according to any of the preceding claims, wherein the display module comprises an emissive display panel, and the infrared emitting device is disposed on the emissive display panel.

8. The stereoscopic display apparatus according to any of the preceding claims and claim 2, wherein the backlight unit comprises a driving control circuit board for generating a control signal for stereoscopic glasses, and transmitting the control signal to the infrared emitting device for controlling the infrared emitting device to emit light.

9. The stereoscopic display apparatus according to claim 8, wherein the infrared emitting device is electrically connected with the driving control circuit board.

10. The stereoscopic display apparatus according to any of the preceding claims, wherein the shutter apparatus comprises an infrared receiver, and the infrared receiver receives the light emitted by the infrared emitting device so as to control the shutter apparatus.

11. The stereoscopic display apparatus according to any of the preceding claims, wherein the shutter apparatus is a head-mounted shutter apparatus or a shutter glasses.

12. The stereoscopic display apparatus according to any of the preceding claims, wherein the shutter apparatus comprises a synchronous control unit, a left shutter unit and a right shutter unit, and the synchronous control unit is electrically connected to the left shutter unit and the right shutter unit.

13. The stereoscopic display apparatus according to claim 12, wherein the synchronous control unit is synchronized with the infrared emitting device for controlling to open or close the left shutter unit and/or the right shutter unit.

14. The stereoscopic display apparatus according to any of the preceding claims, wherein the display module outputs a left image and a right image alternately.
